(19) Europäisches Patentamt
European Patent Office
Office européen des brevets

(11) **EP 4 552 500 A1**

(12) **EUROPEAN PATENT APPLICATION**
published in accordance with Art. 153(4) EPC

(43) Date of publication:
**14.05.2025 Bulletin 2025/20**

(21) Application number: 23835264.5

(22) Date of filing: **16.06.2023**

(51) International Patent Classification (IPC):
*A01P 3/00* (2006.01)       *A01N 43/56* (2006.01)
*A01N 43/58* (2006.01)       *A01N 43/80* (2006.01)
*A01N 25/04* (2006.01)       *A01N 25/10* (2006.01)

(52) Cooperative Patent Classification (CPC):
**A01N 25/04; A01N 25/10; A01N 43/56;
A01N 43/58; A01N 43/80; A01P 3/00**

(86) International application number:
**PCT/JP2023/022387**

(87) International publication number:
**WO 2024/009730 (11.01.2024 Gazette 2024/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.07.2022   JP 2022109096**

(71) Applicant: **Sumitomo Chemical Company, Limited
Tokyo 103-6020 (JP)**

(72) Inventor: **TAKETANI, Iki
Takarazuka-shi, Hyogo 665-8555 (JP)**

(74) Representative: **Cabinet Beau de Loménie
158, rue de l'Université
75340 Paris Cedex 07 (FR)**

(54) **AQUEOUS SUSPENSION AGROCHEMICAL COMPOSITION COMPRISING NATURAL RUBBER**

(57)     An object of the present invention is to provide an aqueous suspension agrochemical composition containing natural rubber, which has improved rainfastness and excellent agrochemical activity effect. The present invention relates to an aqueous suspension agrochemical composition (provided that, excluding compositions for seed treatment) containing an agrochemical active ingredient, a natural rubber, a surfactant, and water, in which a weight ratio of the agrochemical active ingredient to the natural rubber is 100 : 3 to 1 : 3.

**Description**

TECHNICAL FIELD

The present invention relates to an agrochemical composition. More specifically, the present invention relates to an aqueous suspension agrochemical composition containing a natural rubber.

BACKGROUND ART

In recent years, environmental problems caused by microplastics have occurred, and efforts for achieving a Sustainable Development Goals (SDGs) (commonly called Global Goals) have been required. Among them, development of an environmentally friendly agrochemical formulation (agrochemical composition) using natural materials has been required.

The agrochemical formulation may contain a binder as a material, and various binders have been reported so far (see, for example, Patent Document 1).

Among them, depending on the binder to be used, for example, when an aqueous suspension agrochemical composition is applied to a plant, there is a problem that the agrochemical active ingredient is dissolved in water and flowed away due to exposure to rainfall, therefore a desired effect cannot be sufficiently exhibited. This problem is particularly remarkable in the case of an aqueous suspension agrochemical composition containing an agrochemical active ingredient having high water solubility.

PRIOR ART DOCUMENT

PATENT DOCUMENT

Patent Document 1: JP 2012-184209 A

SUMMARY OF THE INVENTION

PROBLEMS TO BE SOLVED BY THE INVENTION

An object of the present invention is to provide an environmentally friendly aqueous suspension agrochemical composition suitable for social problems, which has improved rainfastness and excellent agrochemical activity effect.

MEANS FOR SOLVING THE PROBLEMS

The present inventor has intensively studied to find that by containing a certain amount of a natural rubber is as a binder, an aqueous suspension agrochemical composition capable of suppressing flow away from a plant body (e.g. leaves, stems) due to rainfall and exhibiting an excellent agrochemical activity effect can be obtained, and has completed the present invention.

That is, the present invention is as follows.

[1] An aqueous suspension agrochemical composition (hereinafter referred to as "the aqueous suspension agrochemical composition of the present invention" or "the composition of the present invention") containing an agrochemical active ingredient, a natural rubber, a surfactant, and water, in which a weight ratio of the agrochemical active ingredient to the natural rubber is 100 : 3 to 1 : 3.

[2] The aqueous suspension agrochemical composition according to [1], in which the agrochemical active ingredient is an agrochemical active ingredient having a melting point of 80°C or higher.

[3] The aqueous suspension agrochemical composition according to [1] or [2], in which a water solubility of the agrochemical active ingredient at 20°C is 0.1 to 100 ppm.

[4] The aqueous suspension agrochemical composition according to any one of [1] to [3], in which the water solubility of the agrochemical active ingredient at 20°C is 0.5 to 20 ppm.

[5] The aqueous suspension agrochemical composition according to any one of [1] to [4], in which the agrochemical active ingredient is at least one selected from the group consisting of inpyrfluxam, pyridachlometyl, mandestrobin, and oxazosulfyl.

[6] The aqueous suspension agrochemical composition according to any one of [1] to [5], in which the surfactant is at least one selected from the group consisting of a lignin sulfonate and a polyoxyethylene tristyrylphenyl ether phosphoric acid ester salt.

[7] The aqueous suspension agrochemical composition according to any one of [1] to [6], in which the weight ratio of the agrochemical active ingredient to the natural rubber is 20 : 1 to 1 : 2.

[8] The aqueous suspension agrochemical composition according to any one of [1] to [7], containing 1 to 50% by weight of the agrochemical active ingredient, 0.03 to 40% by weight of the natural rubber, 0.1 to 10% by weight of the surfactant, and 20 to 90% by weight of the water, based on a weight of the aqueous suspension agrochemical composition.

[9] The aqueous suspension agrochemical composition according to any one of [1] to [8], in which the aqueous suspension agrochemical composition is for a foliar application.

[10] A method for controlling pests including applying a water dilution obtained by diluting the aqueous suspension agrochemical composition according to any one of [1] to [9] with water to a plant, by a foliar application.

[11] A method of producing the aqueous suspension agrochemical composition according to any one of [1] to [9], including a step of adding a natural rubber to a suspension containing an agrochemical active ingredient, a surfactant, and water.

[12] Use of a natural rubber for production of the aqueous suspension agrochemical composition according to any one of [1] to [9], for pest control.

[13] Use of the aqueous suspension agrochemical composition according to any one of [1] to [9], for pest control.

EFFECT OF THE INVENTION

Since the aqueous suspension agrochemical composition of the present invention (provided that, excluding compositions for seed treatment) contains a natural rubber which is a natural material, it can be expected to contribute to solving social problems as an environmentally friendly composition. In addition, even when the aqueous suspension agrochemical composition of the present invention contains an agrochemical active ingredient having high water solubility, the agrochemical active ingredient hardly flows out from a plant body (e.g. leaves, stems) due to rainfall or watering during cultivation after application to the plant body, and the aqueous suspension agrochemical composition has rainfastness; therefore, the agrochemical activity effect can be sufficiently exhibited without being greatly affected by rainfall or watering.

MODE FOR CARRYING OUT THE INVENTION

Examples of the "agrochemical active ingredient" used in the present invention include active ingredients used in the control of pests, specifically, the control of insect pests and the like, the control of plant diseases, the weeding of weeds and the like, and the control for plant growth, in the cultivation of crops and the like. The composition of the present invention contains one or more agrochemical active ingredients.

Examples of the agrochemical active ingredient include insecticidal active ingredients, miticidal active ingredients, nematicidal active ingredients, fungicidal active ingredients, herbicidal active ingredients, and plant growth regulator active ingredients. In particular, insecticidal active ingredients, miticidal active ingredients, nematicidal active ingredients, and fungicidal active ingredients are preferred.

As the agrochemical active ingredient of the present invention, an agrochemical active ingredient having a melting point of 80°C or higher is preferably used from the viewpoint of improving the handleability at the time of production. Examples of the agrochemical active ingredient having a melting point of 80°C or higher include the following.

As the insecticidal active ingredient, the miticidal active ingredient, or the nematicidal active ingredient having a melting point of 80°C or higher, for example, the following ingredients are appropriately selected: deltamethrin, tralomethrin, acrinathrin, propoxur, isoprocarb, thiodicarb, XMC, carbaryl, pirimicarb, carbofuran, acephate, trichlorfon, tetrachlorvinphos, diflubenzuron, chlorfluazuron, lufenuron, hexaflumuron, flufenoxuron, flucycloxuron, cyromazine, diafenthiuron, hexythiazox, novaluron, teflubenzuron, triflumuron, imidacloprid, acetamiprid, clothianidin, nitenpyram, thiamethoxam, dinotefuran, thiacloprid, spinosad, flubendiamide, chlorantraniliprole, cyantraniliprole, tetraniliprole, cyclaniliprole, fipronil, ethiprole, spirotetramat, spiromesifen, spirodiclofen, spiropidion, triflumezopyrim, sulfoxaflor, abamectin, emamectin benzoate, lepimectin, milbemectin, pymetrozine, pyrifluquinazon, clofentezine, hexythiazox, etoxazole, chlorfenapyr, cartap, thiocyclam, bensultap, buprofezin, chromafenozide, methoxyfenozide, tebufenozide, amitraz, fluacrypyrim, bifenazate, fenpyroximate, pyridaben, tolfenpyrad, indoxacarb, oxazosulfyl, metaflumizone, cyenopyrafen, pyflubumide, flonicamid, broflanilide, fluxametamide, flupyrimin, flometoquin, benzpyrimoxan, hydramethylnon, sulfluramid, boric acid, beta-cyfluthrin, tioxazafen, afidopyropen, fluazaindolizine, fluopyram, isocycloseram, dimpropyridaz, and cyclobutrifluram.

As the fungicidal active ingredient having a melting point of 80°C or higher, for example, the following ingredients are appropriately selected: inpyrfluxam, fenpyrazamine, mandestrobin, benomyl, carbendazim, thiabendazole, thiophanate methyl, diethofencarb, procymidone, iprodione, vinclozolin, diniconazole, epoxiconazole, tebuconazole, difenoconazole, cyproconazole, triadimefon, furametpyr, mepronil, flutolanil, thifluzamide, fosetyl aluminium, pyrimethanil, mepanipyrim, fludioxonil, fenpiclonil, blasticidin S, kasugamycin, polyoxin, validamycin, azoxystrobin, kresoxim-methyl, metominostrobin, chlorothalonil, mancozeb, captan, forpet, tricyclazole, pyroquilon, probenazole, fthalide, cymoxanil, dimethomorph, famoxadone, oxolinic acid, fluazinam, ferimzone, diclocymet, orysastrobin, isotianil, thiazinyl, thiuram, fluoxastrobin, fenamidone, pyribencarb, fenbuconazole, hexaconazole, imibenconazole, ipconazole, metconazole, simeconazole, hydroxyisoxazole, pencycuron, fluopicolide, pyriofenone, isofetamid, fluopyram, thifluzamide, fluxapyroxad, isopyrazam, penflufen, penthiopyrad, boscalid, pyraziflumid, cyazofamid, amisulbrom, ametoctradin, mepanipyrim, oxathiapiprolin, tripholine, fenarimol, oxpoconazole fumarate, fenhexamid, pyributicarb, benthiavalicarb isopropyl, mandipropamid, tolprocarb, acibenzolar-S-methyl, fosetyl aluminum, flusulfamide, flutianil, dichlobentiazox, tebufloquin, picarbutrazox, ziram, iminoctadine albesilate, iminoctadine acetate, dithianon, fluoroimide, benzovindiflupyr, prothioconazole, carboxin, pydiflumetofen, flutriafol, triticonazole, fluquinconazole, metyltetraprole, fenpicoxamid, sedaxane, isoflucypram, silthiofam, bixafen, dimoxystrobin, pyridachlometyl, ipflufenoquin, bromuconazole, triadimenol, florylpicoxamid, fluoxapiprolin, ethaboxam, quinofumelin, aminopyrifen, mefentrifluconazole, flufenoxadiazam, and fluoxytioconazole.

As the herbicidal active ingredient having a melting point of 80°C or higher, for example, the following ingredients are appropriately selected: atrazine, metribuzin, fluometuron, isoproturon, bromoxynil, ioxynil, 2,4-D and salts or esters thereof, dicamba and salts thereof, mecoprop, bensulfuron-methyl, metsulfuron-methyl, nicosulfuron, primisulfuron-methyl, cyclosulfamuron, imazosulfuron, propyrisulfuron, sulfosulfuron, imazapyr, imazaquin, imazethapyr, bispyribac sodium salt, acifluorfen, acifluorfen sodium salt, paraquat, paraquat dichloride, flumetsulam, triflusulfuron-methyl, fenoxaprop-P-ethyl, difluphenicane, norflurazon, isoxaflutole, glufosinate and salts thereof, glyphosate and salts thereof, bentazone, mefenacet, propanil, fluthiacet-methyl, flumicloracpentyl, flumioxazin, bromobutide, pentoxazone, fenquinotrione, pyraclonil, metazosulfuron, pyrimisulfan, triafamone, tefuryltrione, tolpyralate, pyroxasulfone, fenoxasulfone, ipfencarbazone, cyclopyrimolate, florpyrauxifen-benzyl, chloransulam, diclosulam, imazamox, and chlorimuron ethyl.

As the plant growth regulator active ingredient having a melting point of 80°C or higher, for example, the following ingredients are appropriately selected: maleic hydrazide, chlormecoat chloride, gibberellic acid, mepiquat chloride, thidiazuron, inabenfide, paclobutrazol, AVG, uniconazole-P, and prohexadione calcium.

The agrochemical active ingredient of the present invention preferably has a water solubility of 0.1 to 100 ppm at 20°C, more preferably has a water solubility of 0.1 to 50 ppm at 20°C, and still more preferably has a water solubility of 0.5 to 20 ppm at 20°C, from the viewpoint of rainfastness, that is, difficulty in flowing due to rainfall or watering.

The agrochemical active ingredient of the present invention is preferably at least one compound selected from the group consisting of inpyrfluxam, pyridachlometyl, mandestrobin, and oxazosulfyl.

The composition of the present invention contains the agrochemical active ingredient in a total amount of preferably 1 to 50% by weight, more preferably 10 to 40% by weight, based on the weight of the composition of the present invention.

Here, unless otherwise specified, the numerical value of % by weight is calculated per weight of the composition of the present invention.

The composition of the present invention contains one or more natural rubbers as an adjuvant that acts as a binder. By using the natural rubber, an environmentally friendly formulation can be obtained.

The natural rubber means a substance containing cis-1,4-polyisoprene using sap of a rubber tree as a raw material. Here, as a definition of general natural rubber, in a broad sense, in addition to a natural product-derived unmodified product, a modified product obtained by graft modification with an acrylic monomer or the like and having a modified chemical structure may be included. However, in the present invention, from the viewpoint of providing an environmentally friendly agrochemical composition, the natural rubber defined in the present specification does not include these chemically structurally modified products.

On the other hand, a substance obtained by simply adding a stabilizer (for example, ammonia) such as a coagulation inhibitor to the sap of the rubber tree may be included in the natural rubber of the present invention. A product derived from natural rubber latex (rubber content in natural rubber latex) may be used. The natural rubber latex is not particularly limited, and examples thereof include field latex (raw latex obtained by tapping a rubber tree), high ammonia latex (high ammonia natural rubber latex), low ammonia latex (low ammonia natural rubber latex), centrifugally concentrated latex, and deproteinized latex obtained by treating natural rubber latex with a surfactant, an enzyme, and the like. Examples of such natural rubber latex include one kind or a combination of two or more kinds selected from these latex. Such natural rubber latex can be obtained as a commercially available product, and specific examples thereof include SeLatex (registered trademark) 6111 (manufactured by Sumitomo Rubber Industries, Ltd.), SeLatex (registered trademark) 1101 (manufactured by Sumitomo Rubber Industries, Ltd.), ULACOL (registered trademark) (manufactured by Regitex Corporation), LA-LATEX (manufactured by Regitex Corporation), HA-LATEX (manufactured by Regitex Corporation), and UNIMAC LATEX (manufactured by Unimac Rubber Co., Ltd.), but are not limited thereto.

The composition of the present invention is an aqueous suspension composition (also called aqueous suspension concentrate or SC) in which particles of a solid agrochemical active ingredient particles are suspended in water, and the natural rubber is present in the composition of the present invention in a state of being suspended (dispersed) in water.

By using the natural rubber as a binder, the composition of the present invention can improve rainfastness as compared with the case of using synthetic products or other natural materials.

A weight ratio of the agrochemical active ingredient to the natural rubber is 100 : 3 to 1 : 3, preferably 20 : 1 to 1 : 2.

The composition of the present invention contains the natural rubber in an amount of preferably 0.03 to 40% by weight, more preferably 0.1 to 40% by weight, still more preferably 1 to 40% by weight, and most preferably 1.5 to 40% by weight, based on the weight of the composition of the present invention.

The composition of the present invention contains one or more surfactants. Examples of the surfactant used in the present invention include an anionic surfactant, a nonionic surfactant, a cationic surfactant, and an amphoteric surfactant. In the composition of the present invention, an anionic surfactant is particularly preferable.

Examples of the anionic surfactant include sulfonate, sulfuric acid ester salt, phosphoric acid ester salt, carboxylate, and a mixture thereof.

Examples of the sulfonate include naphthalene sulfonate and formaldehyde condensate thereof, alkylbenzene sulfonate, alkylnaphthalene sulfonate, alkyldiphenyl ether disulfonate, $\alpha$-olefin sulfonate, lignin sulfonate, polyoxyethylene alkylphenyl ether sulfonate, and dialkyl sulfosuccinate.

Examples of the sulfuric acid ester salt include alkyl sulfuric acid ester salt, polyoxyethylene alkyl ether sulfuric acid ester salt, and polyoxyethylene alkyl phenyl ether sulfuric acid ester salt.

Examples of the phosphoric acid ester salt include polyoxyethylene alkylaryl ether phosphoric acid ester salt and polyoxyethylene tristyrylphenyl ether phosphoric acid ester salt.

Examples of the carboxylate include fatty acid salt and polycarboxylate.

Examples of the nonionic surfactant include polyoxyethylene alkyl ether, polyoxypropylene alkyl ether, polyoxyethylene polyoxypropylene alkyl ether, polyoxyethylene distyrylphenyl ether, polyoxyethylene tristyrylphenyl ether, sucrose fatty acid ester, sorbitan fatty acid ester, polyoxyethylene sorbitan fatty acid ester, glycerin fatty acid ester, polyoxyethylene fatty acid ester, polyoxyethylene alkylamine, alkylalkanolamide, polyoxyethylene polyoxypropylene block copolymer, alkyl polyglucoside, and acrylic copolymer.

Examples of the cationic surfactant include alkylamine salt and quaternary ammonium salt.

Examples of the amphoteric surfactant include alkyl betaine.

From the viewpoint of storage stability of the formulation, the surfactant is preferably at least one selected from the group consisting of lignin sulfonate and polyoxyethylene tristyrylphenyl ether phosphoric acid ester salt.

Examples of the lignin sulfonate used in the present invention include sodium lignin sulfonate, potassium lignin sulfonate, calcium lignin sulfonate, and ammonium lignin sulfonate, and sodium lignin sulfonate is preferable. A weight average molecular weight of the lignin sulfonate used in the present invention is usually in a range of 2,000 to 15,000. The weight average molecular weight of the lignin sulfonate used in the present invention means a relative molecular weight using sodium polystyrene sulfonate as a standard substance, which can be measured by a gel permeation chromatography (GPC). The lignin sulfonate can be used as commercially available products. Examples of the commercially available lignin sulfonate include REAX 85A (sodium lignin sulfonate, manufactured by Ingevity Corp.), REAX 907 (sodium lignin sulfonate, manufactured by Ingevity Corp.), REAX 910 (sodium lignin sulfonate, manufactured by Ingevity Corp.), Polyfon F (sodium lignin sulfonate, manufactured by Ingevity Corp.), Newkalgen RX-B (sodium lignin sulfonate, manufactured by TAKEMOTO OIL & FAT Co., Ltd.), and Polyfon H (sodium lignin sulfonate, manufactured by Ingevity Corp.).

The polyoxyethylene tristyrylphenyl ether phosphoric acid ester salt used in the present invention can be used as commercially available products. Examples of the commercially available polyoxyethylene tristyrylphenyl ether phosphoric acid ester salt include SOPROPHOR FL (manufactured by Solvay Nicca, Ltd.), SOPROPHOR FLK (manufactured by Solvay Nicca, Ltd.), STEPFAC TSP PE-K (manufactured by Stepan Company), and Newkalgen FS-3PG (manufactured by TAKEMOTO OIL & FAT Co., Ltd.).

The composition of the present invention contains a surfactant in a total amount of preferably 0.1 to 10% by weight, more preferably 2 to 10% by weight, based on the weight of the composition of the present invention.

The composition of the present invention contains water.

Water used in the composition of the present invention is not particularly limited, and examples thereof include water used in normal aqueous suspension agrochemical compositions such as tap water, well water, and ion-exchanged water.

The composition of the present invention contains water in an amount of preferably 20 to 90% by weight, more preferably 25 to 80% by weight, based on the weight of the composition of the present invention.

The composition of the present invention may further contain one or more formulation auxiliaries used in a normal aqueous agrochemical composition. Examples of the formulation auxiliaries include thickeners, defoamers, preservatives, antifreezing agents, and pH regulators.

Examples of the thickener include natural polysaccharides such as xanthan gum, rhamsan gum, locust bean gum, guar gum, carrageenan, welan gum, alginic acid, alginate, and gum tragacanth; mineral substance powder such as aluminum silicate, magnesium aluminum silicate, smectite, bentonite, hectorite, synthetic hydrated silicic acid, and dry silica; and alumina sol. As these thickeners, commercially available products can be used as they are. Examples of the commercially available products include KELZAN (trade name of CP Kelco) and KELZAN S PLUS (trade name of CP Kelco) which are xanthan gum, VEEGUM R (trade name of Vanderbilt Chemicals, LLC) which is magnesium aluminum silicate, and AEROSIL 200 (trade name of NIPPON AEROSIL CO., LTD.) which is dry silica. These thickeners can be used alone or in combination of two or more.

When the composition of the present invention contains a thickener, the total content thereof is preferably 0.01 to 5% by weight, more preferably 0.1 to 1% by weight, based on the weight of the composition of the present invention.

Examples of the defoamer include silicone-based defoamer. The defoamer may be used alone or in combination of two or more.

When the composition of the present invention contains the defoamer, the total content thereof is preferably 0.01 to 3% by weight, based on the weight of the composition of the present invention.

Examples of the preservative include p-hydroxybenzoic acid esters, salicylic acid derivatives, and isothiazolinone-based preservatives. These preservatives can be used alone or in combination of two or more.

When the composition of the present invention contains the preservative, the total content thereof is preferably 0.005 to 1% by weight, based on the weight of the composition of the present invention.

Examples of the antifreezing agent include ethylene glycol, propylene glycol, urea, and glycerin. These antifreezing agents can be used alone or in combination of two or more.

When the composition of the present invention contains the antifreezing agent, the total content thereof is preferably 1 to 20% by weight, based on the weight of the composition of the present invention.

Examples of the pH regulator include carboxylic acids and salts thereof such as citric acid monohydrate, acetic acid and sorbic acid, phosphoric acid and salts thereof, sulfuric acid and salts thereof, and boric acid and salts thereof.

When the composition of the present invention contains the pH regulator, the total content thereof is preferably 0.01 to 10% by weight, based on the weight of the composition of the present invention.

The composition of the present invention can be produced using an agrochemical active ingredient, a natural rubber, a surfactant, water, and if necessary, formulation auxiliaries such as a thickener, a defoamer, a preservative, an antifreezing agent, and a pH regulator, and the production method thereof is not particularly limited.

Examples of the method of producing the composition of the present invention include a production method including a step of adding a natural rubber to a suspension containing an agrochemical active ingredient, a surfactant, and water.

More specific examples thereof include a production method including

a step (first step) of producing a suspension containing an agrochemical active ingredient, a surfactant, and water, and
a step (second step) of adding a natural rubber to the suspension and uniformly mixing them.

Examples of the first step include a step of mixing an agrochemical active ingredient, a surfactant, and if necessary, a formulation auxiliary such as a defoamer or an antifreezing agent with water, followed by finely pulverizing the obtained mixture with a wet mill such as a bead mill so that the average particle size of the agrochemical active ingredient is 10 $\mu$m or less, preferably 5 $\mu$m or less, to obtain a suspension. In the first step, the obtained mixture may be further suspended (dispersed) with a disperser mill or the like. In the present invention, the particle size means a volume median diameter. The volume median diameter refers to the particle size at which a cumulative frequency in the volume based frequency distribution is to be 50%, and the volume median diameter can be determined by a wet measurement using a laser diffraction particle size analyzer. More specifically, an object to be measured is dispersed in water followed by measuring with the device. As the laser diffraction particle size analyzer, Mastersizer 3000 manufactured by Malvern Instruments Ltd. can be used.

Examples of the second step include a step of adding a natural rubber, and if necessary, a formulation auxiliary such as a thickener, a preservative, or a pH regulator agent to the suspension obtained in the first step, and uniformly mixing them. In the second step, latex containing a natural rubber may be used instead of the natural rubber itself.

The composition of the present invention can be applied to a place such as a paddy field, a farm land, an orchard, a lawn, or a non-agricultural land in the same manner as a normal aqueous suspension agrochemical composition. The composition of the present invention can be applied by a method such as diluting the composition of the present invention with water and applying the resulting water dilution on a plant growing in the above place. As a method of applying the water dilution, foliar applycation of the water dilution using a known sprayer or the like is preferable. As a preferred application form of the composition of the present invention, the composition is not used for seed treatment.

By applying the composition of the present invention to a plant body, pests can be controlled.

When an insecticidal active ingredient, a miticidal active ingredient, or a nematicidal active ingredient is contained as the agrochemical active ingredient, examples of the pests include harmful arthropod such as harmful insects and harmful mites, nemathelminth such as nematodes, and harmful mollusk, but are not limited thereto.

When a fungicidal active ingredient is contained as the agrochemical active ingredient, examples of the pests include plant-pathogenic microorganisms such as fungi, Oomycete, Phytomyxea, and bacteria, but are not limited to.

Examples of the fungi include Ascomycota, Basidiomycota, Blasocladiomycota, Chytridiomycota, Mucoromycota, and Olpidiomycota.

When a herbicidal active ingredient is contained as the agrochemical active ingredient, examples of the pests include weeds. The weed in the present invention means a plant whose growth is undesirable at the site.

EXAMPLES

Next, the present invention is described in more detail by using reference to Production Examples and Comparative Examples; however, the present invention should not be limited to these examples.

First, Production Examples and Comparative Production Examples of the aqueous suspension agrochemical composition are shown.

Details of the products described in Production Examples and Comparative Production Examples are shown below.

Inpyrfluxam: water solubility at 20°C: 16.4 ppm, melting point: 104°C

Pyridachlometyl: water solubility at 20°C: 0.8 ppm, melting point: 174°C

Newkalgen RX-B: sodium lignin sulfonate, manufactured by TAKEMOTO OIL & FAT Co., Ltd.

Propylene glycol: manufactured by ADEKA Corporation

XIAMETER ACP-1500 Silicone compound: silicone-based defoamer, manufactured by Dow Corning Toray Co., Ltd.

Proxel GXL(S): preservative containing 1,2-benzisothiazoline-3-one as an active ingredient, manufactured by Lonza

KELZAN S Plus: xanthan gum, manufactured by CP Kelco

VEEGUM R: magnesium aluminum silicate, manufactured by Vanderbilt Chemicals, LLC

35% sulfuric acid: manufactured by KANAME CHEMICALS Co., Ltd.

ULACOL (registered trademark): aqueous dispersion containing 60% by weight of unmodified natural rubber, manufactured by Regitex Corporation

Nalster MR-174: aqueous dispersion containing 50% by weight of synthetic rubber (carboxy-modified methyl methacrylate-butadiene copolymer), manufactured by NIPPON A & L INC.

Production Example 1

17.7 parts by weight of inpyrfluxam, 17.7 parts by weight of pyridachlometyl, 4 parts by weight of Newkalgen RX-B (manufactured by TAKEMOTO OIL & FAT Co., Ltd.), 5 parts by weight of propylene glycol (manufactured by ADEKA Corporation), 0.1 parts by weight of XIAMETER ACP-1500 Silicone compound (manufactured by Dow Corning Toray Co., Ltd.), and 41.7 parts by weight of ion-exchanged water were mixed to obtain a mixture (i). The obtained mixture (i) was wet-pulverized using a horizontal bead mill (DYNO-MILL KDL, manufactured by WILLY A. BACHOFEN AG Maschinenfabrik) to obtain a suspension (i).

Separately, 0.2 parts by weight of Proxel GXL (S) (manufactured by Lonza), 0.1 parts by weight of KELZAN S Plus (manufactured by CP Kelco), and 0.2 parts by weight of VEEGUM R (manufactured by Vanderbilt Chemicals, LLC) were added to 9.5 parts by weight of ion-exchanged water, and the resulting mixture was stirred for 2 hours to obtain a uniform mixture (ii).

The mixture (ii) was mixed with the suspension (i) previously obtained, 0.1 parts by weight of XIAMETER ACP-1500 Sillicone compound (manufactured by Dow Corning Toray Co., Ltd.), 0.4 parts by weight of 35% sulfuric acid (manufactured by KANAME CHEMICALS Co., Ltd.), and 3.3 parts by weight of ULACOL (registered trademark) (manufactured by Regitex Corporation) to obtain a composition (1) of the present invention containing the components shown in Table 1.

The unit of the numerical value of each component shown in Table 1 is % by weight when the total amount of the aqueous suspension agrochemical composition is 100% by weight.

Production Example 2

17.7 parts by weight of inpyrfluxam, 17.7 parts by weight of pyridachlometyl, 4 parts by weight of Newkalgen RX-B (manufactured by TAKEMOTO OIL & FAT Co., Ltd.), 5 parts by weight of propylene glycol (manufactured by ADEKA Corporation), 0.1 parts by weight of XIAMETER ACP-1500 Silicone compound (manufactured by Dow Corning Toray Co., Ltd.), and 36.7 parts by weight of ion-exchanged water were mixed to obtain a mixture (iii). The obtained mixture (iii) was wet-pulverized using a horizontal bead mill (DYNO-MILL KDL, manufactured by WILLY A. BACHOFEN AG Maschinenfabrik) to obtain a suspension (ii).

Separately, 0.2 parts by weight of Proxel GXL (S) (manufactured by Lonza), 0.1 parts by weight of KELZAN S Plus (manufactured by CP Kelco), and 0.2 parts by weight of VEEGUM R (manufactured by Vanderbilt Chemicals, LLC) were added to 9.5 parts by weight of ion-exchanged water, and the resulting mixture was stirred for 2 hours to obtain a uniform mixture (iv).

The mixture (iv) was mixed with the suspension (ii) previously obtained, 0.1 parts by weight of XIAMETER ACP-1500 Sillicone compound (manufactured by Dow Corning Toray Co., Ltd.), 0.4 parts by weight of 35% sulfuric acid (manufactured by KANAME CHEMICALS Co., Ltd.), and 8.3 parts by weight of ULACOL (registered trademark) (manufactured by Regitex Corporation) to obtain a composition (2) of the present invention containing the components shown in Table 1.

Production Example 3

17.7 parts by weight of inpyrfluxam, 17.7 parts by weight of pyridachlometyl, 4 parts by weight of Newkalgen RX-B (manufactured by TAKEMOTO OIL & FAT Co., Ltd.), 5 parts by weight of propylene glycol (manufactured by ADEKA Corporation), 0.1 parts by weight of XIAMETER ACP-1500 Sillicone compound (manufactured by Dow Corning Toray Co., Ltd.), and 28.3 parts by weight of ion-exchanged water were mixed to obtain a mixture (v). The obtained mixture (v) was wet-pulverized using a horizontal bead mill (DYNO-MILL KDL, manufactured by WILLY A. BACHOFEN AG Maschinenfabrik) to obtain a suspension (iii).

Separately, 0.2 parts by weight of Proxel GXL (S) (manufactured by Lonza), 0.1 parts by weight of KELZAN S Plus (manufactured by CP Kelco), and 0.2 parts by weight of VEEGUM R (manufactured by Vanderbilt Chemicals, LLC) were added to 9.5 parts by weight of ion-exchanged water, and the resulting mixture was stirred for 2 hours to obtain a uniform mixture (vi).

The mixture (vi) was mixed with the suspension (iii) previously obtained, 0.1 parts by weight of XIAMETER ACP-1500 Sillicone compound (manufactured by Dow Corning Toray Co., Ltd.), 0.4 parts by weight of 35% sulfuric acid (manufactured by KANAME CHEMICALS Co., Ltd.), and 16.7 parts by weight of ULACOL (registered trademark) (manufactured by Regitex Corporation) to obtain a composition (3) of the present invention containing the components shown in Table 1.

Production Example 4

17.7 parts by weight of inpyrfluxam, 17.7 parts by weight of pyridachlometyl, 4 parts by weight of Newkalgen RX-B (manufactured by TAKEMOTO OIL & FAT Co., Ltd.), 5 parts by weight of propylene glycol (manufactured by ADEKA Corporation), 0.1 parts by weight of XIAMETER ACP-1500 Sillicone compound (manufactured by Dow Corning Toray Co., Ltd.), and 23.3 parts by weight of ion-exchanged water were mixed to obtain a mixture (vii). The obtained mixture (vii) was wet-pulverized using a horizontal bead mill (DYNO-MILL KDL, manufactured by WILLY A. BACHOFEN AG Maschinenfabrik) to obtain a suspension (iv).

Separately, 0.2 parts by weight of Proxel GXL (S) (manufactured by Lonza), 0.1 parts by weight of KELZAN S Plus (manufactured by CP Kelco), and 0.2 parts by weight of VEEGUM R (manufactured by Vanderbilt Chemicals, LLC) were added to 6.2 parts by weight of ion-exchanged water, and the resulting mixture was stirred for 2 hours to obtain a uniform mixture (viii).

The mixture (viii) was mixed with the suspension (iv) previously obtained, 0.1 parts by weight of XIAMETER ACP-1500 Sillicone compound (manufactured by Dow Corning Toray Co., Ltd.), 0.4 parts by weight of 35% sulfuric acid (manufactured by KANAME CHEMICALS Co., Ltd.), and 25 parts by weight of ULACOL (registered trademark) (manufactured by Regitex Corporation) to obtain a composition (4) of the present invention containing the components shown in Table 1.

Comparative Production Example 1

17.7 parts by weight of inpyrfluxam, 17.7 parts by weight of pyridachlometyl, 4 parts by weight of Newkalgen RX-B (manufactured by TAKEMOTO OIL & FAT Co., Ltd.), 5 parts by weight of propylene glycol (manufactured by ADEKA Corporation), 0.1 parts by weight of XIAMETER ACP-1500 Sillicone compound (manufactured by Dow Corning Toray Co., Ltd.), and 45 parts by weight of ion-exchanged water were mixed to obtain a mixture (ix). The obtained mixture (ix) was wet-pulverized using a horizontal bead mill (DYNO-MILL KDL, manufactured by WILLY A. BACHOFEN AG Maschinenfabrik) to obtain a suspension (v).

Separately, 0.2 parts by weight of Proxel GXL (S) (manufactured by Lonza), 0.1 parts by weight of KELZAN S Plus (manufactured by CP Kelco), and 0.2 parts by weight of VEEGUM R (manufactured by Vanderbilt Chemicals, LLC) were added to 9.5 parts by weight of ion-exchanged water, and the resulting mixture was stirred for 2 hours to obtain a uniform mixture (x).

The mixture (x) was mixed with the suspension (v) previously obtained, 0.1 parts by weight of XIAMETER ACP-1500 Sillicone compound (manufactured by Dow Corning Toray Co., Ltd.) and 0.4 parts by weight of 35% sulfuric acid (manufactured by KANAME CHEMICALS Co., Ltd.) to obtain a comparative composition (1) containing the components shown in Table 1.

Comparative Production Example 2

17.7 parts by weight of inpyrfluxam, 17.7 parts by weight of pyridachlometyl, 4 parts by weight of Newkalgen RX-B (manufactured by TAKEMOTO OIL & FAT Co., Ltd.), 5 parts by weight of propylene glycol (manufactured by ADEKA Corporation), 0.1 parts by weight of XIAMETER ACP-1500 Sillicone compound (manufactured by Dow Corning Toray Co., Ltd.), and 43.3 parts by weight of ion-exchanged water were mixed to obtain a mixture (xi). The obtained mixture (xi) was wet-pulverized using a horizontal bead mill (DYNO-MILL KDL, manufactured by WILLY A. BACHOFEN AG Maschinenfabrik) to obtain a suspension (vi).
Separately, 0.2 parts by weight of Proxel GXL (S) (manufactured by Lonza), 0.1 parts by weight of KELZAN S Plus (manufactured by CP Kelco), and 0.2 parts by weight of VEEGUM R (manufactured by Vanderbilt Chemicals, LLC) were added to 9.5 parts by weight of ion-exchanged water, and the resulting mixture was stirred for 2 hours to obtain a uniform mixture (xii).
The mixture (xii) was mixed with the suspension (vi) previously obtained, 0.1 parts by weight of XIAMETER ACP-1500 Sillicone compound (manufactured by Dow Corning Toray Co., Ltd.), 0.4 parts by weight of 35% sulfuric acid (manufactured by KANAME CHEMICALS Co., Ltd.), and 1.7 parts by weight of ULACOL (registered trademark) (manufactured by Regitex Corporation) to obtain a comparative composition (2) containing the components shown in Table 1.

Comparative Production Example 3

17.7 parts by weight of inpyrfluxam, 17.7 parts by weight of pyridachlometyl, 4 parts by weight of Newkalgen RX-B (manufactured by TAKEMOTO OIL & FAT Co., Ltd.), 5 parts by weight of propylene glycol (manufactured by ADEKA Corporation), 0.1 parts by weight of XIAMETER ACP-1500 Sillicone compound (manufactured by Dow Corning Toray Co., Ltd.), and 35 parts by weight of ion-exchanged water were mixed to obtain a mixture (xiii). The obtained mixture (xiii) was wet-pulverized using a horizontal bead mill (DYNO-MILL KDL, manufactured by WILLY A. BACHOFEN AG Maschinenfabrik) to obtain a suspension (vii).
Separately, 0.2 parts by weight of Proxel GXL (S) (manufactured by Lonza), 0.1 parts by weight of KELZAN S Plus (manufactured by CP Kelco), and 0.2 parts by weight of VEEGUM R (manufactured by Vanderbilt Chemicals, LLC) were added to 9.5 parts by weight of ion-exchanged water, and the resulting mixture was stirred for 2 hours to obtain a uniform mixture (xiv).
The mixture (xiv) was mixed with the suspension (vii) previously obtained, 0.1 parts by weight of XIAMETER ACP-1500 Sillicone compound (manufactured by Dow Corning Toray Co., Ltd.), 0.4 parts by weight of 35% sulfuric acid (manufactured by KANAME CHEMICALS Co., Ltd.), and 10 parts by weight of Nalster MR-174 (manufactured by NIPPON A & L INC.) to obtain a comparative composition (3) containing the components shown in Table 1.
Next, a water resistance (rainfastness) of the composition of the present invention is described by a Test Example.

Test Example 1

A soil was filled into a plastic pot, and wheat was seeded therein, and grown in a greenhouse. Thereafter, the wheat leaf was cut into a length of 4 cm from the tip.
Next, the aqueous suspension agrochemical compositions obtained in Production Examples 1 to 4 and Comparative Production Examples 1 to 3 were each diluted 2000 times with water. Using a micro pipettor (manufactured by Eppendorf) 4 μL of a water dilution obtained was added dropwise to the central part of the wheat leaf surface after the cutting, and air-dried.
Next, the wheat leaf surface was rinsed by flowing 50 mL of water directly above the treatment portion of the water dilution on the wheat leaf surface using an electric pipettor (manufactured by Eppendorf), and all the water used for rinsing was collected in a poly-cup. An amount of the active ingredient present in the recovered water was quantified by LC/MS, and a residual rate of the active ingredient was calculated from the formula of [Math. 1]. The amount of the active ingredient applied to the wheat leaf surface in the formula of [Math. 1] was calculated by applying 4 μL of the water dilution in the central part of the wheat leaf surface after cutting, immediately thereafter rinsing the wheat leaf surface by flowing 50 mL of acetonitrile directly above the treatment portion of the water dilution on the wheat leaf surface using an electric pipettor (manufactured by Eppendorf), collecting all the acetonitrile used for rinsing in the poly cup, and quantifying the amount of the active ingredient present in the collected acetonitrile by LC/MS. It can be evaluated that the higher the residual rate, the less likely the active ingredient is washed away by the water, and the higher the rainfastness. Results are shown in Table 1.

[Math. 1]

$$\text{Residual rate (\%)} = \left(1 - \frac{\text{amount of active ingredient (μg) in water collected by rinsing}}{\text{amount of active ingredient (μg) applied to wheat leaf surface}}\right) \times 100$$

[Table 1]

| | | Composition (1) of the present invention | Composition (2) of the present invention | Composition (3) of the present invention | Composition (4) of the present invention | Comparative composition (1) | Comparative composition (2) | Comparative composition (3) |
|---|---|---|---|---|---|---|---|---|
| Agrochemical active ingredient | Inpyrfluxam | 17.7 | 17.7 | 17.7 | 17.7 | 17.7 | 17.7 | 17.7 |
| | Pyridachlometyl | 17.7 | 17.7 | 17.7 | 17.7 | 17.7 | 17.7 | 17.7 |
| Binder | ULACOL (registered trademark) (natural rubber conversion) | 3.3 (2.0) | 8.3 (5.0) | 16.7 (10.0) | 25 (15.0) | - | 1.7 (1.02) | - |
| | Nalster MR-174 (synthetic rubber conversion) | - | - | - | - | - | - | 10.0 (5.0) |
| Surfactant | Newkalgen RX-B | 4.0 | 4.0 | 4.0 | 4.0 | 4.0 | 4.0 | 4.0 |
| Antifreezing agent | Propylene glycol | 5.0 | 5.0 | 5.0 | 5.0 | 5.0 | 5.0 | 5.0 |
| Thickener | KELZAN S Plus | 0.1 | 0.1 | 0.1 | 0.1 | 0.1 | 0.1 | 0.1 |
| | VEEGUM R | 0.2 | 0.2 | 0.2 | 0.2 | 0.2 | 0.2 | 0.2 |
| Defoamer | XIAMETER ACP-1500 Sillicone compound | 0.2 | 0.2 | 0.2 | 0.2 | 0.2 | 0.2 | 0.2 |
| Preservative | Proxel GXL(S) | 0.2 | 0.2 | 0.2 | 0.2 | 0.2 | 0.2 | 0.2 |
| pH regulator | 35% sulfuric acid | 0.4 | 0.4 | 0.4 | 0.4 | 0.4 | 0.4 | 0.4 |
| | Water | 51.2 | 46.2 | 37.8 | 29.5 | 54.5 | 52.8 | 44.5 |
| | Total | 100 | 100 | 100 | 100 | 100 | 100 | 100 |
| | Binder component/agrochemical active ingredient | 5.6 | 14.1 | 28.2 | 42.4 | 0 | 2.9 | 14.1 |
| | Residual rate (%) of inpyrfluxam | 36.0 | 53.0 | 71.0 | 75.0 | 4.0 | 13.0 | 43.0 |
| | Residual rate (%) of pyridachlometyl | 76.0 | 83.0 | 91.0 | 96.0 | 39.0 | 40.0 | 62.0 |
| | Total residual rate (%) of agrochemical active ingredient | 56.0 | 68.0 | 81.0 | 85.5 | 21.5 | 26.5 | 52.5 |

The "binder component/agrochemical active ingredient" refers to % by weight of a natural rubber or a synthetic rubber with respect to the agrochemical active component.

As shown in Table 1, the composition of the present invention has a high residual rate of the agrochemical active ingredient, and has improved rainfastness. In particular, when an agrochemical active ingredient having high water solubility is contained, a degree of improvement in rainfastness increases.

INDUSTRIAL APPLICABILITY

According to the present invention, it is possible to provide an environmentally friendly aqueous suspension agrochemical composition containing a natural rubber which is a natural material. In addition, it is possible to provide an aqueous suspension agrochemical composition that can significantly suppress the outflow from a treated plant body (e.g. leaves, stems) due to water such as rainfall or watering, and has an excellent agrochemical activity effect.

**Claims**

1. An aqueous suspension agrochemical composition comprising:

   an agrochemical active ingredient;
   a natural rubber;
   a surfactant; and
   water,
   wherein a weight ratio of the agrochemical active ingredient to the natural rubber is 100 : 3 to 1 : 3.

2. The aqueous suspension agrochemical composition according to claim 1, wherein the agrochemical active ingredient is an agrochemical active ingredient having a melting point of 80°C or higher.

3. The aqueous suspension agrochemical composition according to claim 1 or 2, wherein a water solubility of the agrochemical active ingredient at 20°C is 0.1 to 100 ppm.

4. The aqueous suspension agrochemical composition according to any one of claims 1 to 3, wherein the water solubility of the agrochemical active ingredient at 20°C is 0.5 to 20 ppm.

5. The aqueous suspension agrochemical composition according to any one of claims 1 to 4, wherein the agrochemical active ingredient is at least one selected from the group consisting of inpyrfluxam, pyridachlometyl, mandestrobin, and oxazosulfyl.

6. The aqueous suspension agrochemical composition according to any one of claims 1 to 5, wherein the surfactant is at least one selected from the group consisting of a lignin sulfonate and a polyoxyethylene tristyrylphenyl ether phosphoric acid ester salt.

7. The aqueous suspension agrochemical composition according to any one of claims 1 to 6, wherein the weight ratio of the agrochemical active ingredient to the natural rubber is 20 : 1 to 1 : 2.

8. The aqueous suspension agrochemical composition according to any one of claims 1 to 7, comprising 1 to 50% by weight of the agrochemical active ingredient, 0.03 to 40% by weight of the natural rubber, 0.1 to 10% by weight of the surfactant, and 20 to 90% by weight of the water, based on a weight of the aqueous suspension agrochemical composition.

9. The aqueous suspension agrochemical composition according to any one of claims 1 to 8, wherein the aqueous suspension agrochemical composition is for a foliar application.

10. A method for controlling pests comprising applying a water dilution obtained by diluting the aqueous suspension agrochemical composition according to any one of claims 1 to 9 with water to a plant, by a foliar application.

11. A method of producing the aqueous suspension agrochemical composition according to any one of claims 1 to 9, comprising a step of adding a natural rubber to a suspension containing an agrochemical active ingredient, a surfactant, and water.

12. Use of a natural rubber for production of the aqueous suspension agrochemical composition according to any one of claims 1 to 9, for pest control.

13. Use of the aqueous suspension agrochemical composition according to any one of claims 1 to 9, for pest control.

## INTERNATIONAL SEARCH REPORT

| International application No. |
| --- |
| **PCT/JP2023/022387** |

### A. CLASSIFICATION OF SUBJECT MATTER

*A01P 3/00*(2006.01)i; *A01N 43/56*(2006.01)i; *A01N 43/58*(2006.01)i; *A01N 43/80*(2006.01)i; *A01N 25/04*(2006.01)i; *A01N 25/10*(2006.01)i
FI: A01N25/10; A01P3/00; A01N43/56 C; A01N43/58 A; A01N43/80 102; A01N25/04 102

According to International Patent Classification (IPC) or to both national classification and IPC

### B. FIELDS SEARCHED

Minimum documentation searched (classification system followed by classification symbols)

A01P3/00; A01N43/56; A01N43/58; A01N43/80; A01N25/04; A01N25/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII); CAplus/MEDLINE/EMBASE/BIOSIS/WPIX (STN)

### C. DOCUMENTS CONSIDERED TO BE RELEVANT

| Category* | Citation of document, with indication, where appropriate, of the relevant passages | Relevant to claim No. |
| --- | --- | --- |
| Y | JP 11-035408 A (TAKEDA CHEMICAL INDUSTRIES LTD) 09 February 1999 (1999-02-09) claims 1-3, 14, paragraphs [0007]-[0014], [0016]-[0017], [0019], examples 1-5 | 1-13 |
| Y | JP 2019-019124 A (NIPPON KAYAKU KK) 07 February 2019 (2019-02-07) paragraph [0100] | 5-13 |
| Y | JP 2012-184209 A (SUMITOMO CHEMICAL CO LTD) 27 September 2012 (2012-09-27) claims 1, 10-11, paragraphs [0007], [0012], [0028] | 1-13 |
| Y | JP 2008-527065 A (SYNGENTA LIMITED) 24 July 2008 (2008-07-24) claims 1, 7-8, paragraphs [0034]-[0036] | 1-13 |
| A | JP 03-501845 A (DOW CHEMICAL COMPANY LIMITED) 25 April 1991 (1991-04-25) | 1-13 |

☐ Further documents are listed in the continuation of Box C.    ☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **17 August 2023** | **29 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

# EP 4 552 500 A1

## INTERNATIONAL SEARCH REPORT
### Information on patent family members

International application No.

**PCT/JP2023/022387**

| Patent document cited in search report | | | Publication date (day/month/year) | Patent family member(s) | | | Publication date (day/month/year) |
|---|---|---|---|---|---|---|---|
| JP | 11-035408 | A | 09 February 1999 | (Family: none) | | | |
| JP | 2019-019124 | A | 07 February 2019 | (Family: none) | | | |
| JP | 2012-184209 | A | 27 September 2012 | US | 2014/0030301 | A1 | |
| | | | | claims 1, 10-11, paragraphs [0008]-[0010], [0017]-[0021], [0045]-[0046] | | | |
| | | | | WO | 2012/121413 | A1 | |
| | | | | EP | 2683237 | A1 | |
| JP | 2008-527065 | A | 24 July 2008 | US | 2009/0208546 | A1 | |
| | | | | claims 1, 7-8, paragraphs [0034]-[0036] | | | |
| | | | | WO | 2006/070183 | A1 | |
| | | | | EP | 1833297 | A1 | |
| JP | 03-501845 | A | 25 April 1991 | JP | 3-501846 | A | |
| | | | | US | 5321049 | A | |
| | | | | WO | 1989/003175 | A1 | |
| | | | | WO | 1989/003176 | A1 | |
| | | | | EP | 381691 | A1 | |
| | | | | EP | 393069 | A1 | |

Form PCT/ISA/210 (patent family annex) (January 2015)

15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012184209 A